# EUROPEAN PATENT APPLICATION

(11) **EP 4 572 076 A1**
(43) Date of publication of application: **18.06.2025**
(21) Application number: 22964712.8
(22) Date of filing: 08.11.2022
(51) Int. Cl.: H02J 7/00, G06F 15/16

(54) **BATTERY SYSTEM, CONTROL METHOD, CONTROL UNIT AND STORAGE MEDIUM**

(71) Applicant: Contemporary Amperex Technology (Hong Kong) Limited, Central, Central And Western District (HK)
(72) Inventor: LUO, Bingtuan, Ningde, Fujian 352100 (CN); LU, Yanhua, Ningde, Fujian 352100 (CN); YU, Dongxu, Ningde, Fujian 352100 (CN); XU, Xiangxiang, Ningde, Fujian 352100 (CN); CHEN, Bin, Ningde, Fujian 352100 (CN); GUO, Zide, Ningde, Fujian 352100 (CN); ZHU, Yifan, Ningde, Fujian 352100 (CN); JIN, Qiu, Ningde, Fujian 352100 (CN); WU, Ze, Ningde, Fujian 352100 (CN)
(74) Representative: Ran, Handong
(86) International application number: PCT/CN2022/130515
(87) International publication number: WO 2024/098235

(57) **Abstract**

The present application relates to the technical field of energy storage. Provided in the embodiments of the present application are a battery system, a control method, a control unit and a storage medium. The battery system comprises a control unit and at least one battery. The battery comprises an electrical case, and, arranged in the electrical case, a plurality of battery cells, a detection unit and a first switch unit. The plurality of battery cells are connected to form a battery cell assembly. The control unit is separately connected to the detection unit and the first switch unit so as to be used for controlling, according to a detection signal collected by the detection unit, the first switch unit to switch on or off an internal power transmission line and/or external power transmission line of the battery cell assembly. The embodiments of the present application can perform accurate safety protection control on batteries having anomalies such as electrolyte leakage, so as to prevent accidents caused by the anomalies such as liquid leakage of the batteries, thereby improving the operating reliability and safety of batteries and further prolonging the service life of batteries.

## Description

### Technical Field

The present application relates to the field of battery technologies, and in particular to a battery system, a control method, a control unit, and a storage medium.

### Background

With the rapid development of battery technology in energy storage, electric vehicles and other fields, the safety of batteries has become a growing concern. Batteries can be lithium batteries, and so on, and usually contain high-energy substances that can be dangerous in use. A battery system is provided in an electric vehicle and an energy storage system, wherein the battery system comprises a control unit and a battery cluster apparatus constituted by a plurality of batteries by connection, the battery comprising an electrical box and a plurality of battery cells that are provided in the electrical box. During charging and discharging operation of the battery system, in the event that the electrolyte of one or more battery cells leaks, after the positive electrode of the battery cell leaking the electrolyte is conducted through the electrolyte to the case of the electrical box, the leaked electrolyte may be subjected to a high voltage, thus resulting in a risk of smoking and catching fire of the electrolyte, which reduces the safety performance of the battery. At present, there is no technical solution for precise safety protection control of batteries with abnormalities such as electrolyte leakage.

### Summary of the Invention

The present disclosure provides a battery system, a control method, a control unit, and a storage medium that can improve the reliability and safety of the operation of the battery.

A first aspect of the present disclosure provides a battery system, comprising: a control unit and at least one battery, wherein the battery comprises: an electrical box and a plurality of battery cells, a detection unit and a first switching unit that are provided in the electrical box, the plurality of battery cells being connected to form a battery cell assembly; and the control unit is separately connected to the detection unit and the first switching unit for controlling, according to a detection signal collected by the detection unit, the first switching unit to cut off or connect an internal power transmission line and/or an external power transmission line of the battery cell assembly.

By providing a detection unit and a switching unit in the box body of the battery, it is possible to control the switch to close or open according to the detection signal collected by the detection unit, so as to cut off or connect the internal power transmission line and/or the external power transmission line of the battery cell assembly, and it is possible to carry out an accurate safety protection control of the battery in which there is an abnormality such as electrolyte leakage, so as to prevent safety accidents from occurring in the battery in the event of an abnormality such as liquid leakage, thereby improving the reliability and safety of the operation of the battery, and improving the service life of the battery.

Optionally, an arrangement position for the first switching unit comprises at least one of: an internal power transmission line between the battery cells, an external positive electrode power transmission line of the battery cell assembly, and an external negative electrode power transmission line of the battery cell assembly, wherein the external positive electrode power transmission line of the battery cell assembly is used to connect to a positive electrode end of the electrical box, and the external negative electrode power transmission line of the battery cell assembly is used to connect to a negative electrode end of the electrical box.

The switching unit may be provided at one or more optional positions, and at least one of the internal power transmission line between the battery cells, the external positive electrode power transmission line of the battery cell assembly, and the external negative electrode power transmission line of the battery cell assembly may be cut off or connected by the switching unit, thus making it possible to effectively protect the battery, thereby improving the reliability and safety of the operation of the battery.

Optionally, the detection unit comprises: a liquid leakage sensor and/or a thermal runaway detection unit, wherein the liquid leakage sensor is used to detect electrolyte leaking from the battery cell, and the thermal runaway detection unit is used to detect the temperature and voltage of the battery cell.

The liquid leakage sensor detects whether liquid leakage occurs in battery cells, and the thermal runaway detection unit detects the temperatures and voltages of the battery cells, and then the control unit determines whether to perform a protection operation according to the electrolyte leakage signal and the voltage and temperature detection signals of the battery cells, which can prevent safety accidents from occurring in the battery due to abnormalities such as liquid leakage and thermal runaway of the battery cells, so as to improve the reliability and safety of the operation of the battery, thus realizing the effective protection of the battery.

Optionally, the battery comprises: a control subunit, wherein the control subunit is separately connected to a detection unit and a first switching unit that correspond thereto, and is connected to the control unit for sending to the control unit a detection signal collected by the detection unit; and the control subunit is used to control the first switching unit to close or open in the case of receiving a control instruction sent by the control unit.

By providing a control subunit in the battery, which performs data interaction with the control unit and controls the switching unit, it is possible to prevent safety accidents from occurring in the battery, thereby improving the reliability and safety of the operation of the battery.

Optionally, a plurality of batteries are connected to form a battery cluster apparatus; a second switching unit is provided on an external positive electrode power transmission bus and/or an external negative electrode power transmission bus of the battery cluster apparatus; and the control unit is connected to the second switching unit for controlling the second switching unit to cut off or connect the external positive electrode power transmission bus and/or the external negative electrode power transmission bus of the battery cluster apparatus.

By providing switching units on the external positive electrode power transmission bus and the external negative electrode power transmission bus of the battery cluster apparatus to cut off or connect the external positive electrode power transmission bus and the external negative electrode power transmission bus of the battery cluster apparatus, it is possible to improve the reliability and safety of the operation of the battery cluster apparatus, thus realizing effective protection of the battery.

Optionally, an on-off current limiting circuit is provided in the external positive electrode power transmission bus of the battery cluster apparatus.

The provision of current limiting lines can limit the peak current to serve a protective function, which can improve the safety of the use of the battery and prolong the service life of the battery.

Optionally, the current limiting circuit comprises a starting resistor and a cutout switch connected in parallel with the starting resistor.

The starting resistor can be used to limit the current and serve a protective function; and when the battery is in the operating state, the starting resistor is short-circuited, so that the electrical energy consumed by the starting resistor can be reduced.

A second aspect of the present disclosure provides a control method based on the battery system, the control method being executed in a control unit, and comprising: acquiring a detection signal of a detection unit; and controlling a first switching unit to cut off or connect an internal power transmission line and/or an external power transmission line of a battery cell assembly based on the detection signal.

By acquiring a detection signal collected by the detection unit, and controlling cutting-off or connection of the internal power transmission line and/or the external power transmission line of the battery cell assembly based on the detection signal, it is possible to carry out an accurate safety protection control of the battery in which there is an abnormality such as electrolyte leakage, so as to prevent safety accidents from occurring in the battery in the event of an abnormality such as liquid leakage, thereby improving the reliability and safety of the operation of the battery, and improving the service life of the battery.

Optionally, the detection unit comprises: a liquid leakage sensor and/or a thermal runaway detection unit, the detection signal comprises: an electrolyte leakage signal of the liquid leakage sensor and/or voltage and temperature detection signals of battery cells that are collected by the thermal runaway detection unit; and said controlling a first switching unit to cut off or connect an internal power transmission line and/or an external power transmission line of a battery cell assembly based on the detection signal comprises: judging, based on the electrolyte leakage signal and/or the voltage and temperature detection signals of the battery cells, whether the battery system needs to perform a protection operation; and controlling, in the case of determining to perform the protection operation, the first switching unit to open for cutting off the internal power transmission line and/or the external power transmission line of the battery cell assembly.

The liquid leakage sensor detects whether liquid leakage occurs in battery cells, and the thermal runaway detection unit detects the temperatures and voltages of the battery cells, and then the control unit determines whether to perform a protection operation according to the electrolyte leakage signal and the voltage and temperature detection signals of the battery cells, which can prevent safety accidents from occurring in the battery due to abnormalities such as liquid leakage and thermal runaway of the battery cells, so as to improve the reliability and safety of the operation of the battery, thus realizing the effective protection of the battery.

Optionally, a plurality of batteries are connected to form a battery cluster apparatus, and a second switching unit is provided on an external positive electrode power transmission bus and/or an external negative electrode power transmission bus of the battery cluster apparatus; and the method further comprises: controlling, in the case of determining to perform the protection operation, the second switching unit to open for cutting off the external positive electrode power transmission bus and/or the external negative electrode power transmission bus of the battery cluster apparatus; and controlling, after controlling the second switching unit to open, the first switching unit to open.

Before cutting off or connecting the internal power transmission line and/or the external power transmission line of the battery cell assembly, switching units provided on the external positive electrode power transmission bus and the external negative electrode power transmission bus of the battery cluster apparatus are controlled to open, thus making it possible to cut off or connect the external positive electrode power transmission bus and the external negative electrode power transmission bus of the battery cluster apparatus, which can improve the reliability and safety of the operation of the battery, thus realizing effective protection of the battery.

Optionally, in the case of determining to perform the protection operation and before controlling the second switch to open, a work stop request signal is sent to a superior control system to cause the superior control system to stop charging and discharging processing of the battery system.

By sending a signal to the superior control system before cutting off or connecting the external positive electrode power transmission bus and the external negative electrode power transmission bus of the battery cluster apparatus to cause the superior control system to stop charging and discharging processing of the battery system, it is possible to further improve the reliability and safety of the operation of the battery, thus realizing effective protection of the battery.

Optionally, other batteries adjacent to a battery for which the protection operation is required are determined; and first switching units of said other batteries are controlled to open for cutting off internal power transmission lines and/or external power transmission lines of battery cell assemblies of said other batteries.

By cutting off or connecting, based on the detection signals, the internal power transmission lines and/or external power transmission lines of the battery cell assemblies of the other batteries adjacent to the battery for which the protection operation is required, it is possible to improve the reliability and safety of the operation of the battery.

Optionally, the battery comprises: a control subunit, the control subunit being separately connected to a detection unit and a first switching unit that correspond thereto; and said acquiring a detection signal of a detection unit comprises: receiving the detection signal sent by the control subunit; and said controlling a first switching unit to cut off or connect an internal power transmission line and/or an external power transmission line of a battery cell assembly based on the detection signal comprises: sending a control instruction to the control subunit to cause the control subunit to control, based on the control instruction, the first switching unit to cut off or connect the internal power transmission line and/or the external power transmission line of the battery cell assembly.

By means of the control subunit performing data interaction with the control unit and controlling the switching unit, it is possible to prevent safety accidents from occurring in the battery, thereby improving the reliability and safety of the operation of the battery.

A third aspect of the present disclosure provides a control unit, comprising: a memory; and a processor coupled to the memory, wherein the processor is configured to perform the control method provided in the second aspect of the present disclosure based on instructions stored in the memory.

The control unit of the present disclosure has the advantages that the control method of the present disclosure possesses.

A fourth aspect of the present disclosure provides a computer-readable storage medium, the computer-readable storage medium storing computer instruction that, when executed by a processor, implements the control method provided in the second aspect of the present disclosure.

### Description of Drawings

In order to more clearly illustrate the technical solutions of embodiments of the present application, the following is a brief description of the accompanying drawings to be used in embodiments of the present application. It is obvious that the accompanying drawings described below are only some embodiments of the present application, and other accompanying drawings can be obtained according to the accompanying drawings without any creative work for a person of ordinary skill in the art.
Fig. 1A is a structural schematic diagram of a battery system in the prior art; and Fig. 1B is a schematic diagram of a situation in which an electrolyte leaking from a battery cell is subjected to a voltage;
Fig. 2A is a first modular schematic diagram of some embodiments of the battery system of the present disclosure; and Fig. 2B is a first connection schematic diagram of a control unit in some embodiments of the battery system of the present disclosure;
Fig. 3A is a second modular schematic diagram of some embodiments of the battery system of the present disclosure; and Fig. 3B is a second connection schematic diagram of a control unit in some embodiments of the battery system of the present disclosure;
Fig. 4 is a third modular schematic diagram of some embodiments of the battery system of the present disclosure;
Fig. 5 is a schematic flowchart in some embodiments of a control method for a battery system of the present disclosure;
Fig. 6 is a schematic flowchart of cutting off a line of a battery system in some embodiments of a control method for a battery system of the present disclosure;
Fig. 7 is a schematic flowchart of cutting off lines of other batteries in some embodiments of a control method for a battery system of the present disclosure; and
Fig. 8 is a modular schematic diagram of some embodiments of a control unit of the present disclosure.

### Detailed Description

Embodiments of the present application will be described in further detail hereinafter in conjunction with the accompanying drawings and embodiments. The following detailed description of the embodiments and the drawings are used to illustrate the principles of the present application by way of example, but should not be used to limit the scope of the present application, that is, the present application is not limited to the described embodiments.

In the description of the embodiments of the present application, the term "a plurality of" refers to two or more (including two), and similarly, "multiple groups" refers to two or more (including two) groups, and "multiple sheets" refers to two or more (including two) sheets.

The present application utilizes expressions such as "up", "down", "top", "bottom", "front", "back", "inside", and "outside", and so on, that indicate orientation or positional relationships. This is only for the purpose of facilitating the description of the present application and is not an indication or an implication that the apparatus referred to must have a particular orientation, be constructed and operated in a particular orientation, and therefore is not to be construed as a limitation on the scope of protection operation of the present application.

In addition, the terms "first", "second" and "third" are only used for descriptive purposes, and cannot be construed as indicating or implying relative importance. "Vertical" does not mean being vertical in the strict sense, but within the permissible range of error. "Parallel" does not mean being parallel in the strict sense, but within the permissible range of error. Orientation words appearing in the following description are all directions shown in the drawings, and do not limit the specific structure of the present application.

In the description of the present application, it should also be noted that, unless otherwise expressly specified and defined, the terms "install", "connected" and "connect" should be understood in a broad sense, for example, they may be fixedly connected, detachably connected or integrally connected; and they may be directly connected or indirectly connected through an intermediate medium. For those of ordinary skill in the art, the specific meanings of the above terms in the present application may be understood according to specific circumstances.

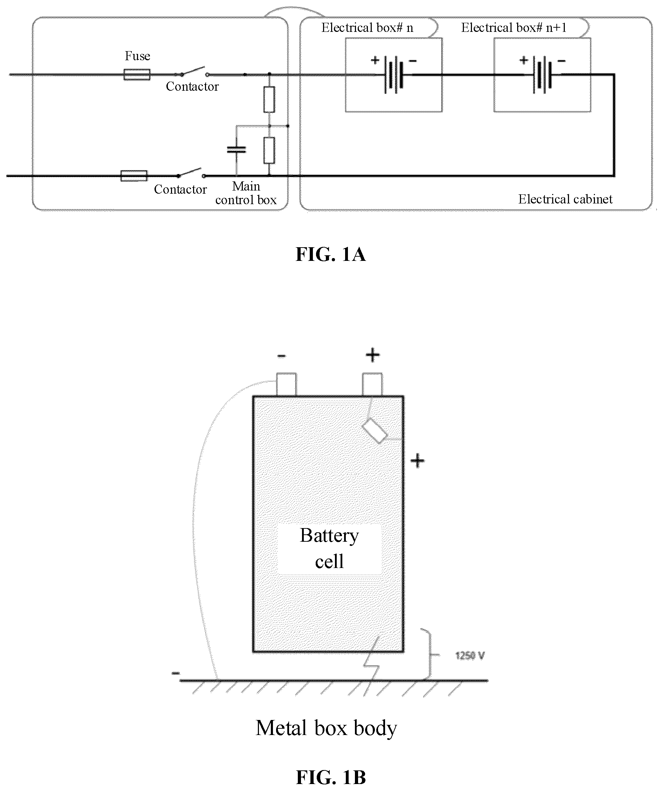

In the related art known to the inventors, a battery system is provided in an electric vehicle and an energy storage system and the like, and the battery system comprises a control unit and a battery cluster apparatus composed of a plurality of batteries by connection. The battery comprises an electrical box (battery box) and a plurality of battery cells provided in the electrical box, the plurality of battery cells being connected to form a battery cell assembly. As shown in Fig. 1A, a battery cluster apparatus is formed by connecting an electrical box #n of a battery n in series with an electrical box #n+1 of a battery n+1, etc., and a high-voltage loop can be provided through the battery cluster apparatus, which is placed in an electrical cabinet. The electrical cabinet can be a 2500V/DC electrical cabinet, and so on. Equal potentials are formed at the DC positive and negative electrodes by voltage equalizing resistors, and equal potentials are achieved at the shell of the main control box, the shell of the electrical cabinet, and the shell of the electrical box, and thus there is a voltage difference of 1250 V between both the positive electrode of the battery cell and the shell, and the negative electrode of the battery cell and the shell in the electrical cabinet.

In the case of electrolyte leakage from battery cells, there are two sources of voltage that the electrolyte is to withstand: first, as shown in Fig. 1B, after a single-point failure occurs due to electrolyte leakage from one battery cell of a single electrical box, the electrolyte causes the negative electrode of the battery cell to be conducted with the metal box body, at which time if the serial lines of a number of electrical boxes are not disconnected, the electrolyte will have to withstand the voltage of 1,250 V/DC, resulting in the risk of catching fire in the electrolyte; and second, if electrolyte leakage occurs in two battery cells inside a single electrical box, the two battery cells may be conducted through the electrolyte, so that the voltage difference between the two battery cells is the voltage that the electrolyte has to withstand; and if the voltage that the electrolyte withstands exceeds a certain voltage value, for example, more than 200V/DC, there is a risk that the electrolyte will catch fire.

A contactor is provided in the main control box to control the connection and cutting off of the power transmission buses of the battery cluster apparatus. During the charging and discharging operation of the battery system, when there are electrolyte leakage in one or more battery cells in a certain electrical box, the liquid leakage sensor in the electrical box sends an electrolyte leakage signal, and the main control box controls the contactor to open based on the electrolyte leakage signal, so as to cut off the charging and discharging loop. At present, a liquid leakage sensor but not a contactor is configured in a single electrical box, so that it is not possible to provide accurate safety protection control for batteries with electrolyte leakage.

The present disclosure provides a battery system and a corresponding control method. A detection unit and a first switching unit are provided in an electrical box, a control unit controls, according to a detection signal collected by the detection unit, the first switching unit to cut off or connect an internal power transmission line and/or an external power transmission line of a battery cell assembly, thus making it possible to carry out an accurate safety protection control of the battery in which there is an abnormality such as electrolyte leakage, so as to prevent safety accidents from occurring in the battery in the event of an abnormality such as liquid leakage, thereby improving the reliability and safety of the operation of the battery, and improving the service life of the battery.

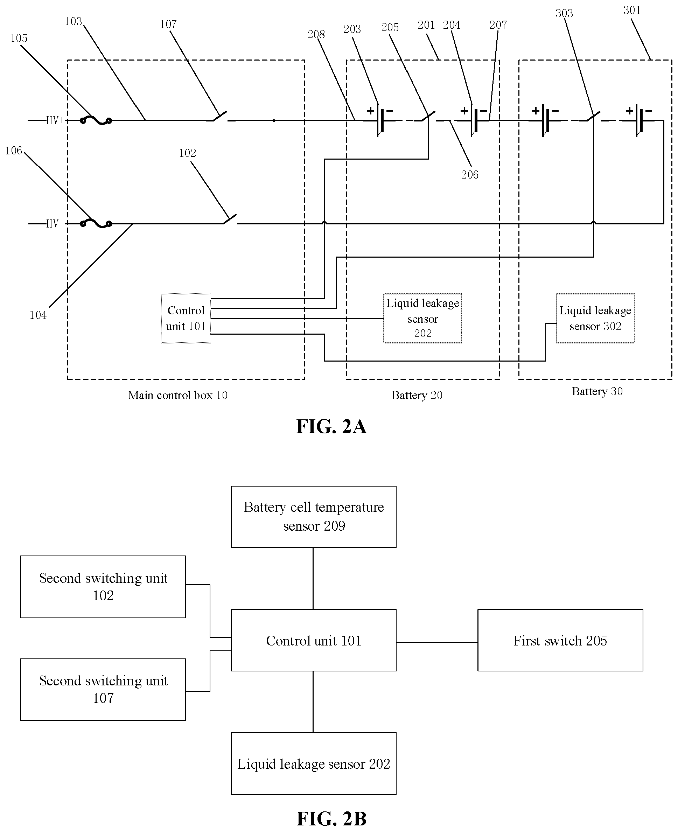

In some embodiments, as shown in Fig. 2A, the present disclosure provides a battery system, comprising a control unit 101 and one or more batteries. The control unit 101 may be provided on a main control board, and the main control board may be provided in a main control box 10; and the plurality of batteries may be a battery 20, a battery 30, etc., and the battery 20, battery 30, etc., are connected to form a battery cluster apparatus. Hereinafter, the battery 20 is taken as an example to illustrate the structure of the battery, and the structures of other batteries are the same as the structure of the battery 20.

The battery 20 comprises an electrical box 201 and a plurality of battery cells 203 and 204, and the like, provided in the electrical box 20, the plurality of battery cells 203 and 204, and the like, being connected to form a battery cell assembly, and the battery 20 further comprises a detection unit and a first switching unit 205 that are provided in the electrical box 20. The battery 20 may comprise a lithium-ion secondary battery, a lithium-ion primary battery, a lithium-sulfur battery, a sodium-lithium-ion battery, a sodium-ion battery, a magnesium-ion battery, or the like, which is not limited in embodiments of the present disclosure. The battery cell battery 20 may be cylindrical, flat, rectangular, or other shapes, etc., and the battery 20 may include, by way of encapsulation, a cylindrical battery cell, a square battery cell, and a pouch battery cell, etc. The battery cells 203 and 204, etc., each comprise an electrolyte, a positive electrode, a negative electrode, and a separator, and so on, wherein the positive electrode and the negative electrode are components in which an electrochemical reaction occurs, and wherein the electrolyte may be a variety of existing electrolytes. The material of the electrical box 201 can be chosen from copper, iron, aluminum, stainless steel, aluminum alloy, plastic and other materials.

The control unit 101 is separately connected to the detection unit and the first switching unit 205 for controlling, according to a detection signal collected by the detection unit, the first switching unit 205 to cut off or connect an internal power transmission line and/or an external power transmission line of the battery cell assembly. The detection unit may be a plurality of detection units, for example, including a liquid leakage sensor, a thermal runaway detection unit, and the like, and the detection signal includes an electrolyte leakage signal from the liquid leakage sensor, voltage and temperature detection signals of the battery cells that are collected by the thermal runaway detection unit, and the like; and the first switching apparatus unit 205 may be a plurality of switching apparatuses, for example, including a plurality of contactors, switches, and the like.

By providing a detection unit and a switching unit in the box body of the battery, it is possible to control the switch to close or open according to the detection signal collected by the detection unit to cut off or connect the internal power transmission line and/or the external power transmission line of the battery cell assembly, and it is possible to carry out an accurate safety protection control of the battery in which there is a situation such as electrolyte leakage, so as to prevent safety accidents from occurring in the battery in the event of a situation such as liquid leakage, thereby improving the reliability and safety of the operation of the battery, and improving the service life of the battery.

In some embodiments, an arrangement position for the first switching unit 205 comprises at least one of: an internal power transmission line 206 between the battery cells, an external positive electrode power transmission line 208 of the battery cell assembly, and an external negative electrode power transmission line 207 of the battery cell assembly, wherein the external positive electrode power transmission line 208 of the battery cell assembly is used to connect to a positive electrode end of the electrical box 201, and the external negative electrode power transmission line 207 of the battery cell assembly is used to connect to a negative electrode end of the electrical box 201. By connecting the positive electrode end and the negative electrode end of the electrical box, a battery cluster apparatus is formed.

The first switching unit 205 may have a plurality of optional arrangement positions, and at least one of the internal power transmission line 206 between the battery cells, the external positive electrode power transmission line 208 of the battery cell assembly, and the external negative electrode power transmission line 207 of the battery cell assembly may be cut off or connected by the first switching unit 205, making it possible to effectively protect the battery, thereby improving the reliability and safety of the operation of the battery.

As shown in Figs. 2A and 2B, the detection unit includes a liquid leakage sensor 202, wherein the liquid leakage sensor 202 may be a plurality of kinds of liquid leakage sensors, and the arrangement position for the liquid leakage sensor 202 may be a plurality of positions in the electrical box 201 and can be used for detecting electrolyte leakage from the battery cells 203 and 204, and the like. The liquid leakage sensor 202 is connected to the control unit 101 for sending an electrolyte leakage signal, wherein the electrolyte leakage signal may be a plurality of kinds of signals.

The control unit 101 determines, according to the electrolyte leakage signal, whether to carry out a protection operation, and when it determines that a liquid leakage situation has occurred, it controls the first switching unit 205 to open for cutting off the internal power transmission line 206 between the battery cells. In the case where the first switching unit 205 is provided in the external positive electrode power transmission line 208 of the battery cell assembly and the external negative electrode power transmission line 207 of the battery cell assembly, the control unit 101, upon determining that the liquid leakage situation has occurred, controls the first switching unit 205 to open for cutting off the external positive electrode power transmission line 208 of the battery cell assembly and the external negative electrode power transmission line 207 of the battery cell assembly. The control unit 101 can provide accurate safety protection for the battery according to the electrolyte leakage signal, which can prevent the battery from smoking, catching fire, and other safety accidents due to the occurrence of the liquid leakage and other conditions, so as to improve the reliability and safety of the operation of the battery, thus realizing the effective protection of the battery.

The batteries 20 and 30 are connected to form a battery cluster apparatus, which can be connected to an electric vehicle, an energy storage system, and other systems through the external positive electrode power transmission bus 103 and the external negative electrode power transmission bus 104, so as to perform charging and discharging. A second switching unit 107 is provided in the external positive electrode power transmission bus 103 of the battery cluster apparatus and a second switching unit 102 is provided in the external negative electrode power transmission bus 104, or the second switching unit 107 may also be provided in the external positive electrode power transmission bus 103 of the battery cluster apparatus, or the second switching unit 102 may be provided in the external negative electrode power transmission bus 104. The second switching apparatus units 102 and 104 may be a plurality of switching units, for example, including a plurality of contactors, switches, and the like. The control unit 101 is connected to the second switching units 102 and 107 for controlling the second switching units 102 and 107 to cut off or connect the external positive electrode power transmission bus 103 and the external negative electrode power transmission bus 104 of the battery cluster apparatus.

By providing switching units to cut off or connect the external positive electrode power transmission bus and the external negative electrode power transmission bus of the battery cluster apparatus, it is possible to improve the reliability and safety of the operation of the battery cluster apparatus, thereby realizing effective protection of the battery cluster apparatus.

In some embodiments, the liquid leakage sensor 202 carries out real-time monitoring of the state of the electrolyte in the electrical box 201, and when the liquid leakage sensor 202 detects the electrolyte in the electrical box 201, it sends an electrolyte leakage signal to the control unit 101. The control unit 101 requests the superior control system to stop charging and discharging, and the superior control system is a control system for a system such as an electric vehicle and an energy storage system to which the battery system is connected, and the superior control system may use a variety of methods to control the battery system to stop charging and discharging.

After determining that the superior control system stops charging and discharging the battery system, the control unit 101 controls the second switching units 102 and 107 to open for cutting off the external positive electrode power transmission bus 103 and the external negative electrode power transmission bus 104 of the battery cluster apparatus. The control unit 101 may use a variety of methods to determine that the superior control system has stopped charging and discharging the battery system. For example, the control unit 101 determines through the received charging and discharging stop completion instruction sent from the superior control system that the superior control system has stopped charging and discharging the battery system. After controlling the second switching units 102 and 107 to open, the control unit 101 controls the first switching unit 205 to open for cutting off the internal power transmission line 206 between the battery cells. By opening the first switching unit, it is possible to ensure that the voltage that the electrolyte withstands is less than a voltage threshold, which prevents the electrolyte from smoking, ignition, etc., and prevents safety accidents from occurring in the battery, thereby improving the reliability and safety of the operation of the battery, and improving the service life of the battery.

The battery 20 is adjacent to the battery 30, and the structure of the battery 30 is the same as that of the battery 20. For example, the battery 30 includes an electrical box 301, a liquid leakage sensor 302, a first switching unit 303, and the like. When controlling the first switching unit 205 to open, the control unit 101 can control the first switching unit 303 for the adjacent battery 30 to open, which can improve the reliability and safety of the operation of the battery. The control unit 101 sends the states of the first switching unit 205, the first switching unit 303, and so on, to a monitoring system; and the monitoring system may be a variety of monitoring systems, for example, the monitoring system is a monitoring system for the battery system itself, a monitoring system for an electric vehicle, a monitoring system for an energy storage system, or the like.

In some embodiments, as shown in Fig. 2B, the detection unit includes a thermal runaway detection unit 209, and the thermal runaway detection unit 209 may be a unit for detecting the temperature and voltage of battery cells. Thermal runaway of a battery means that a battery undergoes a cumulative enhancement of current and battery temperature during constant-voltage charging and is gradually damaged. The thermal runaway detection unit 209 detects the temperature and voltage of the battery cells and sends voltage and temperature detection signals of the battery cells to the control unit 101. The control unit 101 judges, according to the voltage and temperature detection signals of the battery cells, that thermal runaway occurs in a battery cell, and determines to carry out a protection operation, which can prevent safety accidents from occurring in the battery due to thermal runaway of the battery cell, so as to improve the reliability and safety of the operation of the battery, thus realizing the effective protection of the battery.

The causes for liquid leakage in a battery cell are mainly the corrosion of the shell of the battery cell and the blowout occurring during thermal runaway of the battery cell. It is possible to provide both a thermal runaway detection unit and a liquid leakage sensor in the battery at the same time, or provide only a thermal runaway detection unit or only a liquid leakage sensor in the battery. The thermal runaway detection unit 209 collects the voltages and temperatures of the battery cells in real time, and sends the voltage and temperature detection signals of the battery cells to the control unit 101. The control unit 101 performs a thermal runaway warning analysis and diagnosis of a battery cell based on the voltage and temperature of the battery cell, and when it determines that thermal runaway has occurred in the battery cell, it sends alarm information as well as information on the position of the electrical box in which the thermal runaway has occurred to the monitoring system.

The control unit 101 requests the superior control system to stop charging and discharging, and after determining that the superior control system stops charging and discharging the battery system, the control unit 101 controls the second switching units 102 and 107 to open for cutting off or connect the external positive electrode power transmission bus 103 and the external negative electrode power transmission bus 104 of the battery cluster apparatus. After controlling the second switching units 102 and 107 to open, the control unit 101 controls the first switching unit 205 to open for cutting off the internal power transmission line 206 between the battery cells. The battery 20 is adjacent to the battery 30, and the control unit 101, when controlling the first switching unit 205 to open, can control the first switching unit 303 for the adjacent battery 30 to open. The control unit 101 sends the states of the first switching unit 205, the first switching unit 303, and so on, to the monitoring system, and the monitoring system may be a variety of monitoring systems; and when it is determined that electrolyte leakage may occur when the battery cell undergoes thermal runaway, by opening the first switching unit, it is possible to ensure that the voltage that the electrolyte withstands is less than a voltage threshold, which prevents the electrolyte from smoking, ignition, and the like, and prevents safety accidents from occurring in the battery, thereby improving the reliability and safety of the operation of the battery, and improving the service life of the battery.

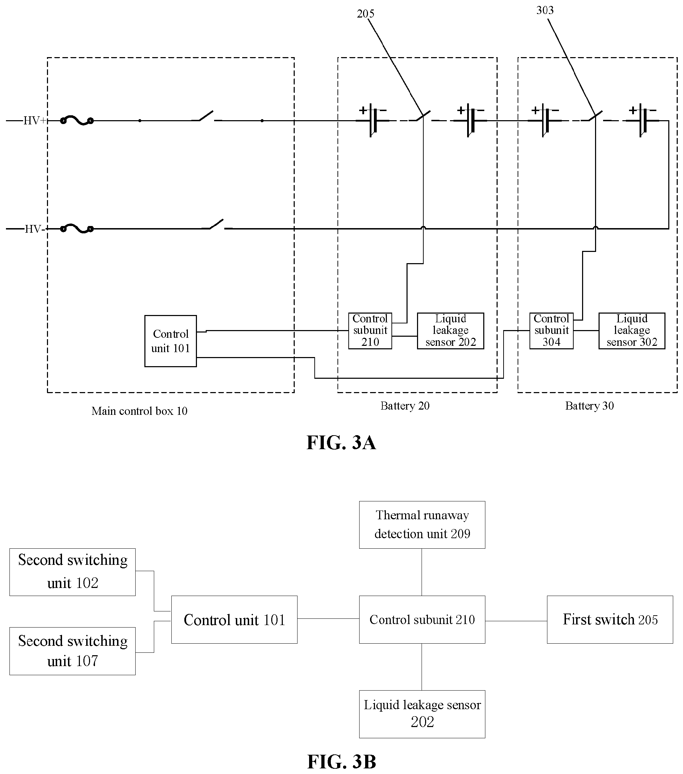

In some embodiments, as shown in Figs. 3A and 3B, the battery 20 includes a control subunit 210, wherein the control subunit 210 is separately connected to detection units and a first switching unit 205 that correspond thereto, and is connected to the control unit 101, and the detection units include a liquid leakage sensor 202, a thermal runaway detection unit 209, and the like. A control subunit 304 may also be provided within the battery 30. The control subunit 210 sends to the control unit 101 detection signals collected by the detection units, wherein the detection signals include an electrolyte leakage signal collected by the liquid leakage sensor 202, the temperatures and voltages of the battery cells collected by the thermal runaway detection unit 209, and the like.

The control subunit 210 controls the first switching unit 205 to close or to be connected in the case of receiving the control instruction sent by the control unit 101. There may be a variety of control subunits 210, such as a CSC (cell battery management unit) unit and the like. There may be a variety of implementations for the control subunit 210, for example, the control subunit 210 includes one or more processors and a memory, wherein the memory may be a volatile memory and/or a non-volatile memory for storing one or more computer program instructions, and the processors can run the program instructions to implement the communication with the control unit and to complete other functions that need to be processed by itself.

The control subunit 210 sends the electrolyte leakage signal collected by the liquid leakage sensor 202, the temperatures and voltages of the battery cells collected by the thermal runaway detection unit 209, and the like, to the control unit 101. When it is determined that an electrolyte leakage situation has occurred and a thermal runaway has occurred in a battery cell, the control unit 101 requests the superior control system to stop charging and discharging. After determining that the superior control system has stopped charging and discharging the battery system, the control unit 101 controls the second switching units 102 and 107 to open. After controlling the second switching units 102 and 107 to open, the control unit 101 sends a control instruction to the control subunit 210, and the control subunit 210 controls, according to the control instruction, the first switching unit 205 to open to cut off the internal power transmission line 206 between the battery cells. By providing control subunits in the batteries, and by means of the control subunits performing data interaction with the control unit and controlling the switching units, it is possible to prevent safety accidents from occurring in the battery, thereby improving the reliability and safety of the operation of the battery.

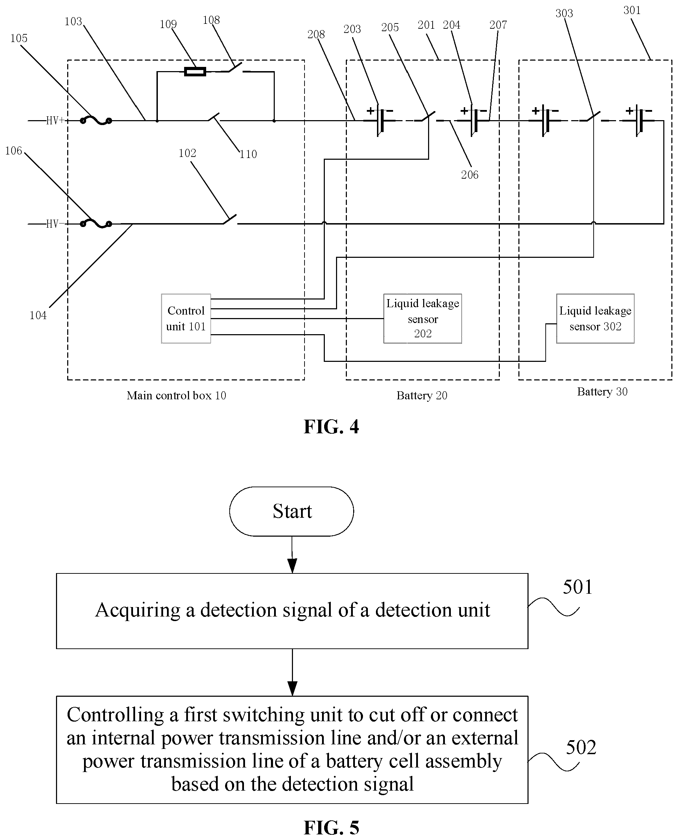

In some embodiments, as shown in Fig. 4, an on-off current limiting circuit is provided in the external positive electrode power transmission bus 103 of the battery cluster apparatus, and with the current limiting circuit, the impulse current generated at the beginning of charging and discharging can be reduced, which can improve the safety of the use of the battery, and prolong the service life of the battery. By providing fuses 105 and 106, it is possible to prevent the transient current from being too large at the time of charging and discharging, and to improve the safety of the use of the battery.

Both the on-off current limiting circuit and the second switching unit are provided in the external positive electrode power transmission bus 103 of the battery cluster apparatus, or it is possible to provide only the on-off current limiting circuit in the external positive electrode power transmission bus 103 of the battery cluster apparatus. The current limiting circuit may have a variety of structures, and the current limiting circuit includes a starting resistor 109, and a cutout switch 110 that is connected in parallel with the starting resistor 109, or a switch 108 connected in series with the starting resistor 109 may also be provided. At the beginning of charging and discharging, the switch 108 is controlled to close and the cutout switch 110 to open for current limitation using the starting resistor 109; and in the case of normal operation of charging and discharging, the cutout switch 110 is controlled to close to perform short-circuiting processing of R1. By opening the switch 108, the starting resistor 109 can be cut out. By providing the starting resistor, the current at the beginning of charging and discharging can be limited, thus serving a protective function.

In some embodiments, the present disclosure provides a control method based on the above battery system, the control method being executed in a control unit. Fig. 5 is a schematic flowchart in some embodiments of a control method for a battery system of the present disclosure. As shown in Fig. 5:
Step 501: acquiring a detection signal of a detection unit.
Step 502: controlling a first switching unit to cut off or connect an internal power transmission line and/or an external power transmission line of a battery cell assembly based on the detection signal.

The control unit may have a variety of implementations for implementing the control method of various embodiments of the present disclosure. For example, the control unit includes one or more processors and a memory, wherein the processors may be central processing units (CPUs) or other forms of processing units having data processing capability and/or instruction execution capability, the memory may be a volatile memory and/or a non-volatile memory for storing one or more computer program instructions, and the processors can run the program instructions to implement the control method or other desired functionality of embodiments of the present disclosure.

In the control method for the battery system of the present disclosure, a detection signal collected by a detection unit provided in a box body of a battery is acquired, and a switch is controlled to close or open based on the detection signal to cut off or connect an internal power transmission line and/or an external power transmission line of a battery cell assembly, thus making it possible to prevent safety accidents from occurring in the battery, thereby improving the reliability and safety of the operation of the battery and improving the service life of the battery.

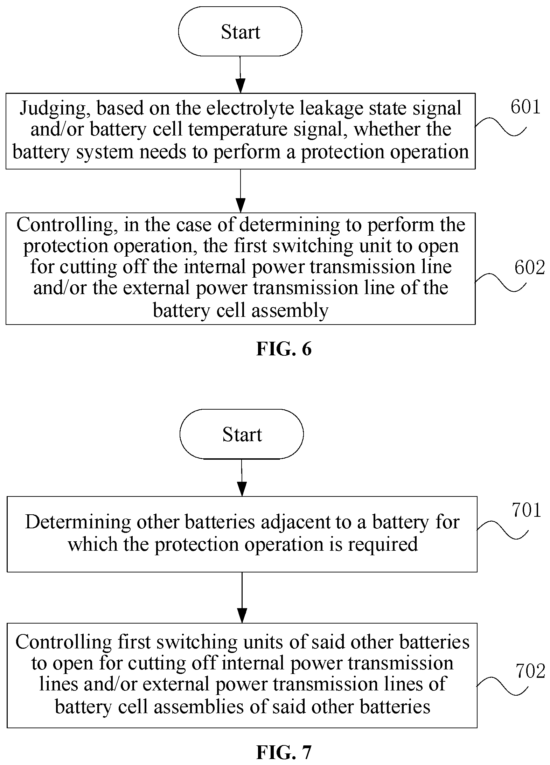

In some embodiments, the detection unit comprises a liquid leakage sensor and/or a thermal runaway detection unit, etc., and the detection signal comprises an electrolyte leakage signal from the liquid leakage sensor and/ or voltage and temperature detection signals of the battery cells, and so on, collected by the thermal runaway detection unit. Fig. 6 is a schematic flowchart of cutting off a line of a battery system in some embodiments of a control method for a battery system of the present disclosure, as shown in Fig. 6:
Step 601: judging, based on the electrolyte leakage signal and/or the voltage and temperature detection signals of the battery cells, whether the battery system needs to perform a protection operation. If it is determined based on the electrolyte leakage signal that electrolyte leakage has occurred, it is determined that the battery system needs to perform a protection operation; and if it is determined based on the analysis of the voltage and temperature detection signals of the battery cells that a battery cell is suffering from thermal runaway, it is determined that the battery system needs to perform a protection operation.
Step 602: controlling, in the case of determining to perform the protection operation, the first switching unit to open for cutting off the internal power transmission line and/or the external power transmission line of the battery cell assembly.

By determining whether to perform a protection operation according to the liquid leakage signal and the voltage and temperature detection signals of the battery cells, it is possible to prevent safety accidents from occurring in the battery due to liquid leakage and thermal runaway of the battery cells, so as to improve the reliability and safety of the operation of the battery, thus realizing the effective protection of the battery.

In some embodiments, a plurality of batteries are connected to form a battery cluster apparatus, and a second switching unit is provided on an external positive electrode power transmission bus and/or an external negative electrode power transmission bus of the battery cluster apparatus. In the case of determining to perform the protection operation, the second switching unit is controlled to open for cutting off the external positive electrode power transmission bus and/or the external negative electrode power transmission bus of the battery cluster apparatus; and after the second switching unit is controlled to open, the first switching unit is controlled to open.

Before cutting off or connecting the internal power transmission line and/or the external power transmission line of the battery cell assembly, switching units provided on the external positive electrode power transmission bus and the external negative electrode power transmission bus of the battery cluster apparatus are controlled, which makes it possible to cut off or connect the external positive electrode power transmission bus and the external negative electrode power transmission bus of the battery cluster apparatus according to the detection signals collected by the detection units, thus realizing effective protection of the battery.

In some embodiments, in the case of determining to perform the protection operation and before controlling the second switch to open, a work stop request signal is sent to a superior control system to cause the superior control system to stop charging and discharging processing of the battery system.

By sending a signal to the superior control system before cutting off or connecting the external positive electrode power transmission bus and the external negative electrode power transmission bus of the battery cluster apparatus to cause the superior control system to stop charging and discharging processing of the battery system, it is possible to further improve the reliability and safety of the operation of the battery, thus realizing effective protection of the battery.

Fig. 7 is a schematic flowchart of cutting off lines of other batteries in some embodiments of a control method for a battery system of the present disclosure. As shown in Fig. 7:
Step 701: determining other batteries adjacent to a battery for which the protection operation is required. Topology information for battery connections in the battery system may be stored in advance, and other batteries adjacent to the battery for which the protection operation is required may be determined based on the topology information for battery connections.
Step 702: controlling first switching units of the other battery systems to open for cutting off internal power transmission lines and/or external power transmission lines of battery cell assemblies of the other batteries.

By cutting off internal power transmission lines and/or external power transmission lines of the battery cell assemblies of the other batteries adjacent to the battery for which the protection operation is required, it is possible to enhance the effective protection of the battery and improve the reliability and safety of the operation of the battery.

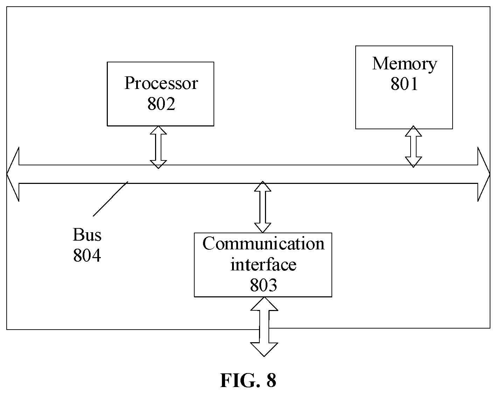

In some embodiments, the present disclosure provides a control unit. Fig. 8 is a modular schematic diagram of an embodiment of a control unit according to the present disclosure. As shown in Fig. 8, the control unit may include a memory 801, a processor 802, a communication interface 803, and a bus 804. The memory 801 is used to store instructions, and the processor 802 is coupled to the memory 801, and the processor 802 is configured to implement the control method for the battery system in any of the above embodiments based on the execution of the instructions stored in the memory 801.

The memory 801 may be a high-speed RAM memory, a non-volatile memory, or the like, and the memory 801 may also be a memory array. The memory 801 may also be chunked, and the chunks may be combined into virtual volumes in accordance with certain rules. The processor 802 may be a central processing unit (CPU), or an application specific integrated circuit (ASIC), or one or more integrated circuits configured to implement the control method of the battery system of the present disclosure.

In an embodiment, the present disclosure provides a computer-readable storage medium, the computer-readable storage medium storing computer instructions that, when executed by a processor, implements the control method for a battery system in the above embodiments.

The computer-readable storage medium may employ any combination of one or more readable media. The readable medium may be a readable signal medium or a readable storage medium. The readable storage medium may, for example, include, but is not limited to, an electrical, magnetic, optical, electromagnetic, infrared, or semiconductor system, apparatus, or device, or any combination of the above. More specific examples of the readable storage medium (a non-exhaustive enumeration) may include: an electrical connection having one or more wires, a portable disk, a hard disk, a random access memory (RAM), a read-only memory (ROM), an erasable programmable read-only memory (EPROM or flash memory), a fiber optic, a portable compact disk read-only memory (CD-ROM), an optical storage device, a magnetic storage device, or any suitable combination of the above.

The present disclosure is described with reference to flowcharts and/or block diagrams of the method, the device (system), and the computer program product according to embodiments of the present disclosure. It is to be understood that each of the processes and/or blocks in the flowcharts and/or block diagrams and combinations of the processes and/or blocks in the flowcharts and/or block diagrams may be implemented by computer program instructions. These computer program instructions may be provided to a processor of a general-purpose computer, a special-purpose computer, an embedded processing machine, or other programmable data-processing device to produce a machine such that the instructions executed by the processor of the computer or other programmable data processing devices produce an apparatus for carrying out the functions specified in the one flow or multiple flows of the flowchart and/or the one block or multiple blocks of the block diagram.

These computer program instructions may also be stored in a computer-readable memory capable of directing a computer or other programmable data processing devices to operate in a particular manner such that the instructions stored in that computer-readable memory produce an article of manufacture comprising an instruction apparatus that implements functions specified in one or more of flows of the flowchart and/or one or more blocks of the block diagram.

It is possible to implement the method and system of the present disclosure in many ways. For example, the method and system of the present disclosure may be implemented by software, hardware, firmware, or any combination of software, hardware, and firmware. The above order of the steps for the method is for illustrative purposes only, and the steps of the method of the present disclosure are not limited to the order specifically described above, unless otherwise specifically stated. In addition, in some embodiments, the present disclosure may also be implemented as programs recorded in a recording medium, and these programs include machine-readable instructions for implementing a method according to the present disclosure. Thus, the present disclosure also covers the recording medium storing programs for implementing the method according to the present disclosure.

## Claims

1. A battery system, comprising a control unit and at least one battery, wherein:
the battery comprises: an electrical box and a plurality of battery cells, a detection unit and a first switching unit that are provided in the electrical box, the plurality of battery cells being connected to form a battery cell assembly; and
the control unit is separately connected to the detection unit and the first switching unit for controlling, according to a detection signal collected by the detection unit, the first switching unit to cut off or connect an internal power transmission line and/or an external power transmission line of the battery cell assembly.

2. The battery system of claim 1, wherein
an arrangement position for the first switching unit comprises at least one of: an internal power transmission line between the battery cells, an external positive electrode power transmission line of the battery cell assembly, and an external negative electrode power transmission line of the battery cell assembly,
wherein the external positive electrode power transmission line of the battery cell assembly is used to connect to a positive electrode end of the electrical box, and the external negative electrode power transmission line of the battery cell assembly is used to connect to a negative electrode end of the electrical box.

3. The battery system of claim 1, wherein
the detection unit comprises a liquid leakage sensor and/or a thermal runaway detection unit,
wherein the liquid leakage sensor is used to detect electrolyte leaking from the battery cell, and the thermal runaway detection unit is used to detect the temperature and voltage of the battery cell.

4. The battery system of claim 1, wherein
the battery comprises a control subunit, wherein the control subunit is separately connected to a detection unit and a first switching unit that correspond thereto, and is connected to the control unit for sending to the control unit a detection signal collected by the detection unit; and the control subunit is used to control the first switching unit to close or open in the case of receiving a control instruction sent by the control unit.

5. The battery system of claim 1, wherein
a plurality of batteries are connected to form a battery cluster apparatus; a second switching unit is provided on an external positive electrode power transmission bus and/or an external negative electrode power transmission bus of the battery cluster apparatus; and the control unit is connected to the second switching unit for controlling the second switching unit to cut off or connect the external positive electrode power transmission bus and/or the external negative electrode power transmission bus of the battery cluster apparatus.

6. The battery system of claim 5, wherein
a current limiting circuit, operable to be opened and closed, is provided in the external positive electrode power transmission bus of the battery cluster apparatus.

7. The battery system of claim 6, wherein
the current limiting circuit comprises a starting resistor and a cutout switch connected in parallel with the starting resistor.

8. A control method based on the battery system of claim 1, the control method being executed in a control unit and comprising:
acquiring a detection signal of a detection unit; and
controlling a first switching unit to cut off or connect an internal power transmission line and/or an external power transmission line of a battery cell assembly based on the detection signal.

9. The method of claim 8, wherein the detection unit comprises a liquid leakage sensor and/or a thermal runaway detection unit, the detection signal comprising: an electrolyte leakage signal from the liquid leakage sensor and/or voltage and temperature detection signals of battery cells that are collected by the thermal runaway detection unit; and said controlling a first switching unit to cut off or connect an internal power transmission line and/or an external power transmission line of a battery cell assembly based on the detection signal comprises:
determining, based on the electrolyte leakage signal and/or the voltage and temperature detection signals of the battery cells, whether the battery system is to perform a protection operation; and
controlling, when it is determined that the protection operation is to be performed, the first switching unit to open for cutting off the internal power transmission line and/or the external power transmission line of the battery cell assembly.

10. The method of claim 9, wherein a plurality of batteries are connected to form a battery cluster apparatus, and a second switching unit is provided on an external positive electrode power transmission bus and/or an external negative electrode power transmission bus of the battery cluster apparatus; and the method further comprises:
controlling, when it is determined that the protection operation is to be performed, the second switching unit to open for cutting off the external positive electrode power transmission bus and/or the external negative electrode power transmission bus of the battery cluster apparatus; and
controlling, after controlling the second switching unit to open, the first switching unit to open.

11. The method of claim 10, further comprising:
sending, when it is determined that the protection operation is to be performed and before controlling the second switch to open, a work stop request signal to a superior control system to cause the superior control system to stop charging and discharging processing of the battery system.

12. The method of claim 9, further comprising:
determining other batteries adjacent to a battery for which the protection operation is required; and
controlling first switching units of said other batteries to open for cutting off internal power transmission lines and/or external power transmission lines of battery cell assemblies of said other batteries.

13. The method of claim 8, wherein the battery comprises a control subunit, the control subunit being separately connected to a detection unit and a first switching unit that correspond thereto; and said acquiring a detection signal of a detection unit comprises:
receiving the detection signal sent by the control subunit; and
said controlling a first switching unit to cut off or connect an internal power transmission line and/or an external power transmission line of a battery cell assembly based on the detection signal comprises:
sending a control instruction to the control subunit to cause the control subunit to control, based on the control instruction, the first switching unit to cut off or connect the internal power transmission line and/or the external power transmission line of the battery cell assembly.

14. A control unit, comprising:
a memory; and a processor coupled to the memory, wherein the processor is configured to perform the method of any one of claims 8-13 based on instructions stored in the memory.

15. A computer-readable storage medium, the computer-readable storage medium storing computer instructions that, when executed by a processor, implement the method of any one of claims 8-13.
